# EUROPÄISCHE PATENTSCHRIFT

(11) **EP 1 563 251 B1**
(45) Veröffentlichungstag und Bekanntmachung des Hinweises auf die Patenterteilung: **08.01.2014**
(21) Anmeldenummer: 03785512.9
(22) Anmeldetag: 14.11.2003
(51) Int. Cl.: G01B 11/00, G01B 11/02, G01B 11/24, G01B 11/30, G02B 21/00, G01N 21/954

(54) **VORRICHTUNG UND VERFAHREN ZUR MESSUNG VON OBERFLÄHEN AN ZYLINDERINNENWÄNDEN MIT KONFOKALEN MIKROSKOPEN**
DEVICE AND METHOD FOR MEASURING SURFACES ON THE INTERNAL WALLS OF CYLINDERS, USING CONFOCAL MICROSCOPES
DISPOSITIF ET PROCEDE DE MESURE DE SURFACES SUR DES PAROIS INTERIEURES DE CYLINDRES A L'AIDE DE MICROSCOPES CONFOCAUX

(30) Priorität: 18.11.2002 DE 10253891
(43) Veröffentlichungstag der Anmeldung: 17.08.2005
(73) Patentinhaber: NanoFocus AG, 46149 Oberhausen (DE)
(72) Erfinder: WEBER, Mark, A., 47445 Moers (DE)
(74) Vertreter: Röther, Peter
(86) Internationale Anmeldenummer: PCT/DE2003/003781
(87) Internationale Veröffentlichungsnummer: WO 2004/046642

(56) Entgegenhaltungen:
- EP-A- 0 810 457
- US-A- 4 055 382
- US-A- 4 963 018
- US-A- 5 640 270
- KNITTEL J ET AL: "Endoscope-compatible confocal microscope using a gradient index-lens system" OPTICS COMMUNICATIONS, NORTH-HOLLAND PUBLISHING CO. AMSTERDAM, NL, Bd. 188, Nr. 5-6, 15. Februar 2001 (2001-02-15), Seiten 267-273, XP004317426 ISSN: 0030-4018

## Beschreibung

Die Erfindung betrifft eine Vorrichtung zur Erzeugung dreidimensionaler Oberflächenbilder von Zylinderinnenflächen in Motorblöcken durch Verwendung eines konfokalen Mikroskops.

Besonders in der Automobilindustrie ergibt sich für dieses Verfahren ein großer Markt, da besonders die Zylinderinnenflächen sich für die Motorentechnik als kritische Elemente erweisen.

Bisher sind Lösungen für taktile Verfahren und abbildende Mikroskope bekannt,
so z.B. aus der US-A 4 055 382.

Die taktilen Verfahren haben den Nachteil, dass sie die Oberfläche scannen und dadurch relativ langsam arbeiten. Abbildende Mikroskope haben bisher den Nachteil, dass sie keine dreidimensionalen Daten erzeugen können. Mit der Erfindung wird eine Vorrichtung zur dreidimensionalen Messung an Zylinderinnenwänden mit rechnergesteuerten konfokalen Mikroskopen beschrieben.

Die hier vorgestellte Erfindung hat den grundlegenden Vorteil, dass man zerstörungsfrei und vergleichsweise schnell dreidimensionale Abbildungen von Zylinderinnenflächen mit beugungsbegrenzter lateraler Auflösung durchführen kann. Der Tubus des konfokalen Mikroskops kann in nahezu voller Länge in den Zylinder mit einem minimalen Durchmesser von 79 mm oder kleiner versenkt werden. Mit Hilfe dieser Erfindung kann man im Zylinder bis zur maximalen Eintauchtiefe von z. Zt. 100 mm konfokaler Oberflächenbilder zerstörungsfrei aufnehmen.

Eine spezielle Führung verhindert Beschädigungen am Tubus und ermöglicht die vertikale und horizontale Justage des Beobachtungsbereichs. Durch eine Rotationsbewegung im Zylinder kann nahezu die gesamte Zylinderinnenfläche vermessen werden.

Das eingelassene Mikroskop ist computergesteuert und kann sowohl Videobilder als auch Konfokalbilder erzeugen. Mit einer Auswerteinheit, die auch mit einer Remote-Steuerung versehen sein kann, werden, aus den erzeugten Rohdaten topographische Paramenter erzeugt.

Die hier vorgestellte Entwicklung ist ein Spezialtubus, der den ursprünglich verwendeten Mikroskoptubus ersetzt, mit einem Haltemechanimus, der das konfokale Mikroskop auf dem Zylinder befestigt und auch als Justiereinheit dienst. Der Aufbau des Grundkörpers bleibt weitgehend unangetastet. Um Bauraum zu sparen, weicht der Reflexionswinkel von der Senkrechten ab, indem die Umlenkoptik den Strahl um weniger als 90° umlenkt.

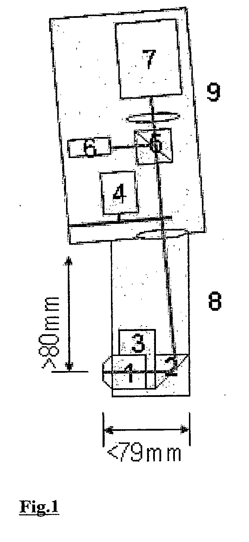

Figur 1 zeigt den Strahlengang eines konfokalen Mikroskops mit Umlenkoptik zur Beobachtung von Zylinderoberflächen. Das horizontal liegende Objektiv 1 ist in ein horizontal liegendes Positionierelement 3, hier ein Piezostellelement, eingeschraubt. Durch ein Prisma 2 mit verspiegelter Hypotenuse wird der Strahl umgelenkt. Um Bauraum zu sparen, weicht der Reflexionswinkel um 6° von der Senkrechten ab. Der Tubus 8 wird nahe der im Zwischenbild liegenden Nipkowscheibe 4 an dem Mikroskopkörper 9 befestigt. Der Mikroskopkörper 9 besteht im wesentlichen aus einer motorgetriebenen rotierenden Nipkowscheibe 4, einem Strahlteiler 5 sowie einer Lichtquelle 6 und einer CCD-Kamera 7.

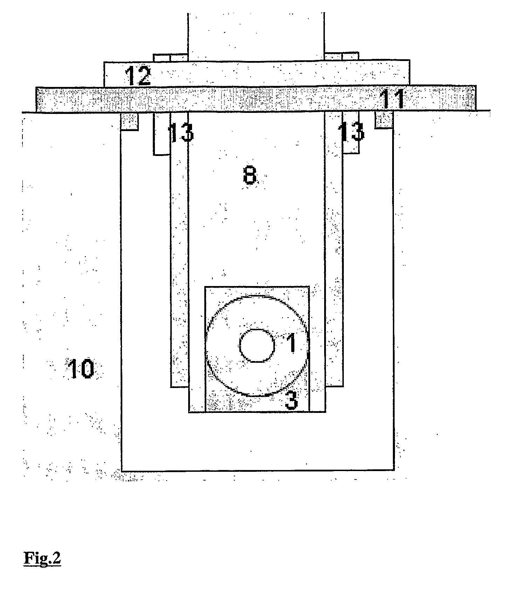

Figur 2 zeigt einer Prinzipskizze der Halterung und Justiereinrichtung zum Einbau des konfokalen Mikroskops im Zylinder. In den Zylinder 10 wird im Bereich der oberen 4 mm eine Klemmplatte 11 eingeklemmt. Diese besteht aus zwei Teilen, die man zum Klemmen auseinander spreizen kann. Beide Teile haben jeweils an der Unterseite zwei hervorstehende Nippel, um in den Zylinder hinein greifen zu können. Darauf ist eine verschiebbare Justierplatte 12 befestigt, womit man das Objektiv fokussieren kann. In zwei gegenüberliegenden Gleitführungen 13 wird der Tubus 8 eingesetzt und geführt und kann bei Erreichen der richtigen Eintauchtiefe mittels einer Klemmvorrichtung arretiert werden. An dem Tubus ist ein horizontal liegender Piezoversteller 3 befestigt, der ein Objektiv 1 hält.

## Patentansprüche

1. Vorrichtung zur Erzeugung dreidimensionaler Oberflächenbilder von Zylinderinnenflächen in Motorblöcken mit einem rechnergesteuerten konfokalen Mikroskop, welches einen Mikroskopkörper (9), einen daran befestigten Tubus (8) mit einem Objektiv (1), dem eine Umlenkoptik (2) mit horizontal liegendem Translator (3) vorgeschaltet ist, aufweist und wobei die Umlenkoptik (2) derart gestaltet ist, dass der vom Mikroskopkörper (9) kommende und von einer Lichtquelle (6) ausgesandte Lichtstrahl um weniger als 90° in das Objektiv (1) umgelenkt wird, wobei die optische Achse des Objektivs (1) horizontal verläuft.

2. Vorrichtung nach Anspruch 1,
**dadurch gekennzeichnet,**
**dass** der Mikroskopkörper (9) im wesentlichen aus einer Lichtquelle (6) einem Strahlteiler (5), einer zwischen Strahlteiler (5) und Objektiv (4) rotierenden Nipkowscheibe (4) sowie einer CCD-Kamera (7) besteht.

3. Vorrichtung nach Anspruch 1 oder 2,
**dadurch gekennzeichnet,**
**dass** die Umlenkoptik (2) aus einem Reflexionsprisma besteht.

4. Vorrichtung nach Anspruch 1 oder 2,
**dadurch gekennzeichnet,**
**dass** die Umlenkoptik (2) aus einem Oberflächenspiegel besteht.

5. Vorrichtung nach einem der Ansprüche 1 bis 4,
**dadurch gekennzeichnet,**
**dass** das Objektiv (1) ein Standardobjektiv mit einer Abgleichlänge von 45 mm ist.

6. Vorrichtung nach einem der Ansprüche 1 bis 4,
**dadurch gekennzeichnet,**
**dass** das Objektiv (1) eine kürzere Abgleichlänge als 45 mm besitzt.

7. Vorrichtung nach einem der Ansprüche 1 bis 6,
**dadurch gekennzeichnet,**
**dass** das Objektiv (1) mittels eines Piezostellelements (3) verfahrbar ist.

8. Vorrichtung nach einem der Ansprüche 1 bis 6,
**dadurch gekennzeichnet,**
**dass** das Objektiv (1) mittels eines Schrittmotors (3) verfahrbar ist.

9. Vorrichtung nach einem der Ansprüche 1 bis 8 mit einer Einrichtung zur Befestigung (11) und zur Justierung (12) des rechnergesteuerten konfokalen Mikroskops am Zylinder eines Motorblocks.

10. Vorrichtung nach Anspruch 9,
**dadurch gekennzeichnet,**
**dass** die Befestigungseinrichtung aus einer Klemmplatte (11) besteht.

11. Vorrichtung nach Anspruch 9 oder 10,
**dadurch gekennzeichnet,**
**dass** das Mikroskop durch eine Linearführung (13) in den Zylinder einfahrbar ist.

12. Vorrichtung nach einem der Ansprüche 9 bis 11,
**dadurch gekennzeichnet,**
**dass** das Mikroskop hinsichtlich der Eintauchtiefe durch die Linearführung (13) justierbar und fixierbar ist.

13. Vorrichtung nach einem der Ansprüche 9 bis 12,
**dadurch gekennzeichnet,**
**dass** mittels der Befestigungs- oder Justiereinrichtung (11, 12) die Einheit aus Objektiv (1), Umlenkoptik (2) und Translator (3) um die Zylinderachse rotieren kann.

14. Vorrichtung nach einem der Ansprüche 9 bis 13,
**dadurch gekennzeichnet,**
**dass** mittels der Befestigung (11) der Abstand zwischen Objektiv und Zylinderinnenfläche justierbar ist.

## Claims

1. A device for producing three-dimensional surface images of cylinder inner surfaces in engine blocks with a computer-controlled confocal microscope which has a microscope body (9), a tube (8) secured to it with a lens (1), to which a system of optical deflectors (2) with a horizontal translator (3) is connected upstream, wherein the system of optical deflectors (2) is designed in such a manner that the light beam coming from the microscope body (9) and emitted by a light source (6) is deflected by less than 90° into the lens (1) and wherein the optical axis of the lens (1) runs horizontally.

2. The device according to Claim 1, **characterised in that** the microscope body (9) consists essentially of a light source (6), a beam splitter (5), and a Nipkow disc (4) rotating between the beam splitter (5) and lens (4), and a CCD camera (7).

3. The device according to Claim 1 or 2, **characterised in that** the system of optical deflectors (2) consists of a reflection prism.

4. The device according to Claim 1 or 2, **characterised in that** the system of optical deflectors (2) consists of a surface mirror.

5. The device according to any one of Claims 1 to 4, **characterised in that** the lens (1) is a standard lens with a parfocal length of 45 mm.

6. The device according to any one of Claims 1 to 4, **characterised in that** the lens (1) has a parfocal length shorter than 45 mm.

7. The device according to any one of Claims 1 to 6, **characterised in that** the lens (1) is moveable by means of a piezoelectric actuator element (3).

8. The device according to any one of Claims 1 to 6, **characterised in that** the lens (1) is moveable by means of a step motor (3).

9. The device according to any one of Claims 1 to 8, with a device for securing (11) and adjusting (12) the computer-controlled confocal microscope on the cylinder of an engine block.

10. The device according to Claim 9, **characterised in that** the securing device consists of a clamping plate (11).

11. The device according to Claim 9 or 10, **characterised in that** the microscope can be inserted into the cylinder by means of a linear guide (13).

12. The device according to any of Claims 9 to 11, **characterised in that** the microscope is adjustable and fixable relative to the depth of immersion by means of the linear guide (13).

13. The device according to any one of Claims 9 to 12, **characterised in that** the unit comprising the lens (1), the system of optical deflectors (2) and the translator (3) is able to rotate about the cylinder axis by means of the securing or adjusting device (11, 12).

14. The device according to any one of Claims 9 to 13, **characterised in that** the distance between the lens and the cylinder inner surface is adjustable by means of the securing device (11).

## Revendications

1. Dispositif pour produire des images de surface tridimensionnelles de surfaces internes de cylindres dans des blocs-moteurs, en utilisant un microscope confocal commandé par ordinateur qui comporte un corps de microscope (9), un tube (8) fixé à celui-ci et ayant un objectif (1) qui est précédé d'un composant optique de déviation (2) ayant un organe de translation horizontal (3), et dans lequel le composant optique de déviation (2) est configuré de telle sorte que le faisceau lumineux émis par une source de lumière (6) et arrivant par le corps de microscope (9) est dévié dans l'objectif (1) de moins de 90°, l'axe optique de l'objectif (1) s'étendant horizontalement.

2. Dispositif selon la revendication 1, **caractérisé en ce que** le corps de microscope (9) est essentiellement constitué d'une source de lumière (6), d'un séparateur de faisceau (5), d'un disque de Nipkow (4) pouvant tourner entre le séparateur de faisceau (5) et l'objectif (1), ainsi que d'une caméra CCD (7).

3. Dispositif selon la revendication 1 ou 2, **caractérisé en ce que** le composant optique de déviation (2) est constitué d'un prisme de réflexion.

4. Dispositif selon la revendication 1 ou 2, **caractérisé en ce que** le composant optique de déviation (2) est constitué d'un miroir de surface.

5. Dispositif selon l'une des revendications 1 à 4, **caractérisé en ce que** l'objectif (1) est un objectif standard ayant une longueur d'égalisation de 45 mm.

6. Dispositif selon l'une des revendications 1 à 4, **caractérisé en ce que** l'objectif (1) a une longueur d'égalisation inférieure à 45 mm.

7. Dispositif selon l'une des revendications 1 à 6, **caractérisé en ce que** l'objectif (1) peut être déplacé au moyen d'un élément de réglage piézoélectrique (3).

8. Dispositif selon l'une des revendications 1 à 6, **caractérisé en ce que** l'objectif (1) peut être déplacé au moyen d'un moteur pas à pas (3).

9. Dispositif selon l'une des revendications 1 à 8 ayant un dispositif pour fixer (11) et régler (12) le microscope confocal commandé par ordinateur sur le cylindre d'un bloc-moteur.

10. Dispositif selon la revendication 9, **caractérisé en ce que** le dispositif de fixation est constitué d'une plaque de serrage (11).

11. Dispositif selon la revendication 9 ou 10, **caractérisé en ce que** le microscope peut être introduit dans le cylindre au moyen d'un guide linéaire (13).

12. Dispositif selon l'une des revendications 9 à 11, **caractérisé en ce que** le microscope peut être réglé et fixé, en ce qui concerne la profondeur d'insertion, par le guide linéaire (13).

13. Dispositif selon l'une des revendications 9 à 12, **caractérisé en ce que** l'ensemble constitué de l'objectif (1), du composant optique de déviation (2) et de l'organe de translation (3) peut tourner autour de l'axe de cylindre au moyen du dispositif de fixation ou de réglage (11, 12).

14. Dispositif selon l'une des revendications 9 à 13, **caractérisé en ce que** la distance entre l'objectif et la surface interne de cylindre peut être réglée au moyen du dispositif de fixation (11).
